(19) Europäisches Patentamt

European Patent Office

Office européen des brevets

(11) **EP 1 228 327 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(21) Anmeldenummer: **00977517.2**

(22) Anmeldetag: **09.11.2000**

(51) Int Cl.⁷: **F16H 3/089**

(86) Internationale Anmeldenummer:
**PCT/EP00/11059**

(87) Internationale Veröffentlichungsnummer:
**WO 01/035000 (17.05.2001 Gazette 2001/20)**

(54) **STUFENWECHSELGETRIEBE**

STEP-CHANGE GEARBOX

BOITE A CHANGEMENT DE VITESSES ETAGE

(84) Benannte Vertragsstaaten:
**DE**

(30) Priorität: **11.11.1999 DE 19954130**

(43) Veröffentlichungstag der Anmeldung:
**07.08.2002 Patentblatt 2002/32**

(73) Patentinhaber: **ZF FRIEDRICHSHAFEN Aktiengesellschaft**
**88038 Friedrichshafen (DE)**

(72) Erfinder:
• **FÜHRER, Gerhard**
  **88048 Friedrichshafen (DE)**
• **LANZ, Hermann**
  **88699 Frickingen (DE)**
• **STAUBER, Roland**
  **88048 Friedrichshafen (DE)**

(56) Entgegenhaltungen:
**DE-A- 4 429 546     DE-A- 19 904 479**
**US-A- 4 388 838     US-A- 5 284 067**

EP 1 228 327 B1

**Beschreibung**

Die vorliegende Erfindung betrifft ein mehrgängiges Stufenwechselgetriebe insbesondere für Nutzfahrzeuge, mit einer Eingangswelle und einer in axialer Verlängerung der Eingangswelle angeordneten Hauptwelle, mit einer parallel zur Hauptwelle angeordneten Vorgelegewelle und mit einer parallel zu diesen beiden Wellen angeordneten Zwischenwelle für ein Rückwärtsgangrad, nach dem Oberbegriff des Anspruchs 1; wie es aus US-A-4 338 838 bekannt ist.

Derartige Stufenwechselgetriebe sind vielfältig bekannt. So beschreibt die DE A 44 29 546 der Anmelderin ein mehrgängiges Stufenwechselgetriebe, wobei die Hauptwelle und die Vorgelegewelle mit Zahnrädern versehen sind, die miteinander in Eingriff stehen und die Übersetzungsstufen des Getriebes bilden. Die Vorgelegewelle selbst ist geteilt, wobei die beiden Teile der Vorgelegewelle wahlweise mit der Hauptwelle verbindbar sind; in den normalen Vorwärtsgängen bleibt dabei ein Teil der Vorgelegewelle abgekoppelt und dreht nicht mit. Einsetzbar sind derartige Getriebe insbesondere bei Nutzkraftfahrzeugen mit neun oder zehn Gängen.

Häufig wird bei mehrgängigen Stufenwechselgetrieben für Nutzkraftfahrzeuge die Vorgelegewellenverzahnung für den Rückwärtsgang identisch wie diejenige für den ersten Gang ausgeführt, wodurch sich zwangsläufig ein etwas schnellerer Rückwärtsgang ergibt, dessen Geschwindigkeitserhöhung ca. 5 bis 10 % beträgt. Diese gleiche Vorgelegewellenverzahnung wird deshalb gewählt, um dadurch die beiden Vorgelegenwellenverzahnungen in einem Arbeitsgang bzw. mit dem gleichen. Werkzeug oder den gleichen Werkzeugen durchzuführen. Die schnellere Übersetzung im Rückwärtsgang führt jedoch zu einer dadurch bedingten höheren Gesamtgetriebespreizung. Die erforderliche Gesamtgetriebespreizung ergibt sich aus den Randbedingungen einer möglichst langsamen Rangiergeschwindigkeit im ersten Gang und im Rückwärtsgang bei Leerlaufdrehzahl von ca. 600 min$^{-1}$ und einer möglichst verbrauchsgünstigen Motordrehzahl von ca. 1200 min$^{-1}$ bis 1500 min$^{-1}$ bei Höchstgeschwindigkeit, die bei ca. 85 km/h liegt. Aufgrund der gegebenen Unübersichtlichkeit bei Rückwärtsfahrt wird jedoch im Rückwärtsgang in der Regel eine niedrigere Rangiergeschwindigkeit gewünscht als im ersten Gang, z. B. < 2,5 km/h im Rückwärtsgang verglichen mit < 3,0 km/h im ersten Gang.

Es sind Getriebe bekannt geworden, die eine langsamere Übersetzung im Rückwärtsgang ermöglichen als wie im ersten Gang. Diese Getriebe weisen jedoch noch den Nachteil auf, dass unterschiedliche Werkzeuge für die Herstellung der unterschiedlichen Verzahnungen erforderlich sind, wodurch sich die Herstellungskosten erhöhen.

In der deutschen Patentanmeldung P 19904479 der Anmelderin wurde bereits ein Getriebe vorgeschlagen, welches eine langsamere Rangiergeschwindigkeit im Rückwärtsgang als wie im ersten Gang ermöglicht, bei gleichzeitig reduzierter Gesamtgetriebespreizung und bei dem gleiche Werkzeuge zur Herstellung der Verzahnungen verwendet werden können, sodass die Kosten bei der Herstellung verringert werden können. Bei diesem Getriebe weist das auf der Hauptwelle vorgesehene Zahnrad für den ersten Gang die gleiche Verzahnung auf wie das auf der Hauptwelle für den Rückwärtsgang vorgesehene Zahnrad.

Bei diesem und bei den anderen oben erwähnten bekannten Getrieben ist es jedoch nicht möglich, dass das Zwischenrad für den Rückwärtsgang in axialer Richtung im Bereich des Rades für den ersten Gang liegen kann, da die Summe der Kopfkreishalbmesser des Zwischenrades für den Rückwärtsgang und des Hauptwellenrades für den ersten Gang größer als der Achsabstand der Hauptwelle zur Zwischenwelle für den Rückwärtsgang ist.

Aufgabe der vorliegenden Erfindung ist es, ein Stufenwechselgetriebe zu schaffen, das weniger Bauraum in axialer Richtung als die bekannten Stufenwechselgetriebe benötigt und das eine größere Getriebeübersetzung im Rückwärtsgang als im ersten Gang aufweist bei gleichzeitig reduzierter Gesamtgetriebespreizung und das durch gleiche Werkzeuge zur Herstellung der Verzahnungen niedrige Herstellungskosten ermöglicht.

Ausgehend von einem Stufenwechselgetriebe der eingangs näher genannten Art erfolgt die Lösung dieser Aufgabe mit dem im kennzeichnenden Teil des Hauptanspruchs angegebenen Merkmal; ein vorteilhaftes Ausführungsbeispiel ist im Unteranspruch beschrieben.

Erfindungsgemäß ist also vorgesehen, die Verzahnungen der Räderkette aus erstem Gang und Rückwärtsgang derart auszugestalten, dass das Zwischenrad für den Rückwärtsgang in axialer Richtung den gleichen Bauraum ausnutzen kann wie das Hauptwellenrad für den ersten Gang. Weiterhin ist die Verzahnungsgeometrie auf der Vorgelegewelle für den ersten Gang und den Rückwärtsgang identisch.

Diese Ausgestaltung ist besonders vorteilhaft für Getriebe, bei denen das Hauptwellenrad für den ersten Gang und das Hauptwellenrad für den Rückwärtsgang direkt nebeneinander angeordnet sind, d. h. dass kein Schaltpaket oder ähnliches zwischen den beiden Rädern angeordnet ist.

Genauer gesagt ist die Summe der Kopfkreishalbmesser des Zwischenrades für den Rückwärtsgang und des Hauptwellenrades für den ersten Gang kleiner als der Achsabstand zwischen der Hauptwelle und der Zwischenwelle für den Rückwärtsgang. Dadurch ist es möglich, dass der Eingriff zwischen Rückwärtsgang-Vorgelegewelle und Rückwärtsgang-Zwischenrad in einer anderen axialen Ebene stattfindet als der Eingriff zwischen dem Zwischenrad für den Rückwärtsgang und dem Hauptwellenrad für den Rückwärtsgang.

Die erfindungsgemäße Ausgestaltung bietet ferner den Vorteil, dass keine Wechselbeanspruchung durch Zahnfußbiegung des Zwischenrades für den Rückwärtsgang auftritt, sodass weniger Bauraum in axialer Richtung benötigt wird. Die erforderliche Verzahnungsbreite zwischen Rückwärtsgang-Vorgelegewelle und Rückwärtsgang-Zwischenwelle geht nicht in die Gesamtgetriebelänge ein, so lange die Bedingung erfüllt ist:

Breite erster Gang ≥ Breite Rückwärtsgang VW/ZW.

Im Rückwärtsgang ist eine größere Getriebeübersetzung als im ersten Gang möglich, bei gleichzeitig reduzierter Gesamtgetriebespreizung; für den ersten Gang und für den Rückwärtsgang auf der Vorgelegewelle sind die gleichen Verzahnungen möglich, wobei die Verzahnung auf der Vorgelegewelle kürzer ausgeführt werden kann, d. h. nur so breit wie sie für den ersten Gang benötigt wird.

Durch gleiche Werkzeuge zur Herstellung der Verzahnungen (gleicher Modul und gleicher Schrägungswinkel für die Verzahnungen des ersten Ganges und des Rückwärtsganges) werden die Herstellungskosten gering gehalten. Damit verbindet die erfindungsgemäße Ausgestaltung die Vorteile der bekannten technischen Lösungen ohne deren Nachteile aufzuweisen.

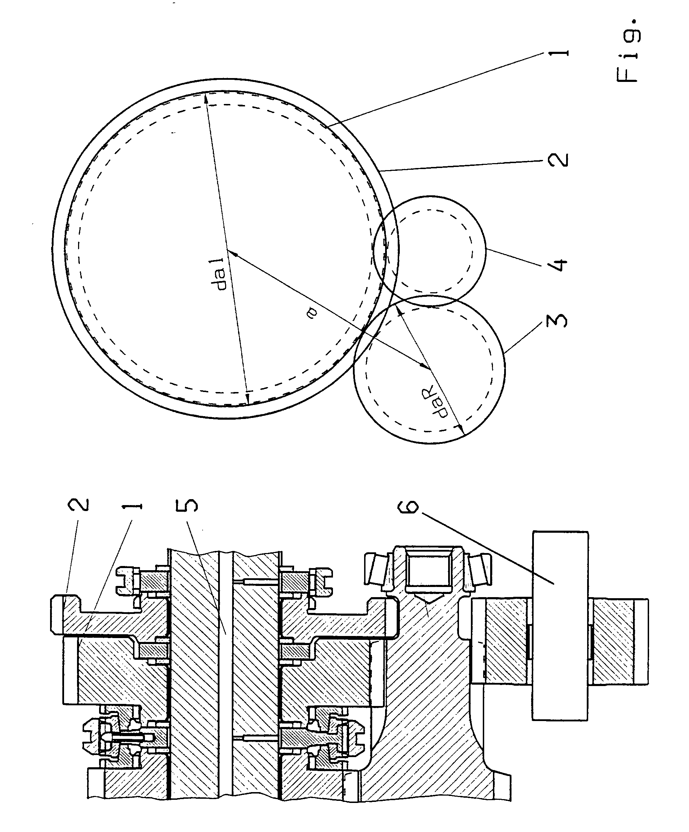

Im folgenden wird die Erfindung anhand der Zeichnung näher erläutert; in der einzigen Figur ist in der linken Hälfte ein Längsschnitt durch einen Teil des erfindungsgemäßen Stufenwechselgetriebes dargestellt und in der rechten Hälfte eine Draufsicht auf die an dieser Stelle angeordneten Zahnräder.

Mit 1 ist dabei das Hauptwellenrad für den ersten Gang, mit 2 das Hauptwellenrad für den Rückwärtsgang, mit 3 das Zwischenrad für den Rückwärtsgang auf der Zwischenwelle, mit 4 die Vorgelegewelle mit den Verzahnungen für den ersten Gang und den Rückwärtsgang, mit 5 die Hauptwelle und mit 6 die Zwischenwelle bezeichnet.

Erfindungsgemäß ist vorgesehen, dass die Summe der Kopfkreishalbmesser des Zwischenrades 3 für den Rückwärtsgang $\frac{daR}{2}$ und des Hauptwellenrades 1 für den ersten Gang $\frac{da1}{2}$ kleiner als der Achsabstand a zwischen Hauptwelle 5 und Zwischenwelle 6 ist. Dadurch ist es möglich, dass der Eingriff zwischen Rückwärtsgang-Vorgelegewelle 4 und dem Zwischenrad 3 für den Rückwärtsgang in einer anderen axialen Ebene stattfindet als der Eingriff zwischen dem Zwischenrad 3 für den Rückwärtsgang und dem Hauptwellenrad 2 für den Rückwärtsgang.

Diese geometrische Bedingung läßt sich durch folgende Formel ausdrücken:

$$\frac{daR+da1}{2} < a$$

mit

daR = Kopfkreisdurchmesser des Zwischenrades 3 für den Rückwärtsgang

da1 = Kopfkreisdurchmesser des Hauptwellenrades für den ersten Gang

a = Achsabstand zwischen Hauptwelle und Zwischenwelle für den Rückwärtsgang

Bezugszeichenliste

1    Hauptwellenrad-erster Gang
2    Hauptwellenrad-Rückwärtsgang
3    Zwischenrad für den Rückwärtsgang
4    Vorgelegewelle
5    Hauptwelle
6    Zwischenwelle

**Patentansprüche**

1. Mehrgängiges Stufenwechselgetriebe insbesondere für Nutzfahrzeuge, mit einer Eingangswelle und einer in axialer Verlängerung der Eingangswelle angeordneten Hauptwelle, mit einer parallel zur Hauptwelle angeordneten Vorgelegewelle und mit einer parallel zu diesen beiden angeordneten Zwischenwelle für das Rückwärtsgangrad, wobei die Wellen Zahnräder aufweisen, die die Übersetzungsstufen des Getriebes bilden, darunter ein Hauptwellenrad (1) für den ersten Gang und ein Hauptwellenrad (2) für den Rückwärtsgang auf der Hauptwelle, ein Zwischenrad (3) für den Rückwärtsgang auf der Zwischenwelle und Verzahnungen für den Rückwärtsgang und den ersten Gang auf der Vorgelegewelle (4), **dadurch gekennzeichnet, dass** die Summe der Kopfkreishalbmesser des Zwischenrades (3) für den Rückwärtsgang $\frac{daR}{2}$ und des Hauptwellenrades (1) für den ersten Gang $\frac{da1}{2}$ kleiner als der Achsabstand (a) zwischen der Hauptwelle (5) und der Zwischenwelle (6) ist.

2. Stufenwechselgetriebe nach Anspruch 1, **dadurch gekennzeichnet, dass** die Verzahnungsgeometrie auf der Vorgelegewelle (4) für den ersten Gang und für den Rückwärtsgang identisch ist.

**Claims**

1. The invention relates to a variable-speed transmission for commercial vehicles, which comprises an input shaft and a main shaft arranged as axial extension of the input shaft, a countershaft arranged parallel to the main shaft, and an intermediate shaft for the reverse gear arranged parallel to both, with the shafts featuring gear wheels constituting the gear ratios of the transmission, among them a main-shaft gear (1) for the first gear and a main-shaft gear (2) for the reverse gear on the main shaft, an intermediate gear (3) for the reverse gear on the intermediate shaft and gearing for the reverse gear and the first gear on the countershaft (4), **<u>characterized</u> in that** the sum of the tip radii of the intermediate gear (3) for the reverse gear $\frac{daR}{2}$ and of the main-shaft gear (1)
for the first gear $\frac{da1}{2}$ is smaller than the center distance (a) between the main shaft (5) and the intermediate shaft (6).

2. A variable-speed transmission according to claim 1, **<u>characterized</u> in that** the gear geometry on the countershaft (4) is identical for the first gear and for the reverse gear.

### Revendications

1. Boîte de vitesses à plusieurs rapports, en particulier pour véhicules utilitaires, dotée d'un arbre d'entrée et d'un arbre principal, celui-ci étant monté en extension axiale de l'arbre d'entrée, dotée d'un arbre de renvoi disposé parallèlement à l'arbre principal et d'un arbre intermédiaire pour le pignon de marche arrière disposé parallèlement à ces deux arbres, sachant que ces arbres sont pourvus d'engrenages formant les étages de démultiplication de la boîte de vitesses, parmi lesquels se trouve un pignon de l'arbre principal (1) pour la première vitesse et un pignon de l'arbre principal (2) pour la marche arrière montés sur l'arbre principal, un pignon intermédiaire (3) pour la marche arrière monté sur l'arbre intermédiaire et des dentures pour la marche arrière et la première vitesse prévues sur l'arbre de renvoi (4), **caractérisée en ce que** la somme des rayons du cercle de tête du pignon intermédiaire (3) pour la marche arrière daR/2 et du pignon de l'arbre principal (1) pour la première vitesse da1/2 est inférieure à l'entraxe (a) entre l'arbre principal (5) et l'arbre intermédiaire (6).

2. Boîte de vitesses à plusieurs rapports selon la revendication 1, **caractérisée en ce que** la géométrie de la denture sur l'arbre de renvoi (4) est identique pour la première vitesse et la marche arrière.

Fig.